# EUROPÄISCHE PATENTSCHRIFT

(11) **EP 1 255 805 B1**
(45) Veröffentlichungstag und Bekanntmachung des Hinweises auf die Patenterteilung: **07.07.2004**
(21) Anmeldenummer: 01905786.8
(22) Anmeldetag: 16.02.2001
(51) Int. Cl.: C10K 1/00

(54) **VERFAHREN ZUR BEHANDLUNG VON KOKSOFENROHGAS**
METHOD FOR TREATING CRUDE COKE OVEN GAS
PROCEDE DE TRAITEMENT DE GAZ BRUT DE FOUR A COKE

(30) Priorität: 18.02.2000 DE 10007503
(43) Veröffentlichungstag der Anmeldung: 13.11.2002
(73) Patentinhaber: Deutsche Montan Technologie GmbH, 45307 Essen (DE)
(72) Erfinder: ROSSA, Frank, 44803 Bochum (DE); SCHRÖDER, Horst, 44388 Dortmund (DE); GIERTZ, Hans-Josef, 40880 Ratingen (DE); HEIN, Michael, 45276 Essen (DE)
(86) Internationale Anmeldenummer: PCT/EP2001/001758
(87) Internationale Veröffentlichungsnummer: WO 2001/060953

(56) Entgegenhaltungen:
- EP-B- 0 221 061
- DE-A- 4 116 576

## Beschreibung

Die Erfindung betrifft ein Verfahren zur Behandlung von Koksofenrohgas gemäß dem Oberbegriff des Anspruchs 1.

Das bei der Verkokung von Steinkohle entstehende braungelbe Gemisch aus Gasen und Dämpfen, das sogenannte Koksofenrohgas, beinhaltet einen nicht unerheblichen Feststoffanteil, der während der Füllvorgänge deutlich ansteigt. Das Koksofenrohgas wird zunächst in einer direkten Rohgaskühlung mit sogenanntem Vorlagenberieselungswasser in der Vorlage gekühlt. Dabei wird das Koksofenrohgas auf eine Temperatur von ca. 80°C gekühlt und gleichzeitig ein Teil des mitgeführten Feststoffanteils aus dem Koksofenrohgas ausgewaschen und in der flüssigen Phase gemeinsam mit Teer und Kondensat abgeschieden.

Der restliche Feststoffanteil, der in Form von Aerosolen an feinste Teer- und Wassertropfen gebunden ist, gelangt mit dem Koksofenrohgas in die sogenannten Vorkühler. Dort wird das Koksofenrohgas in einer indirekten Kühlung von ca. 80°C auf ca. 20°C gekühlt. Bei dieser Abkühlung sublimiert ein Großteil des in dem Koksofenrohgas enthaltenen Naphthalins. Gleichzeitig werden teerige, feststoffhaltige Inhaltsstoffe des Koksofenrohgases auf den Kühlrohren der Vorkühler abgeschieden. In Verbindung mit dem sublimierten Naphthalin besteht die Gefahr, dass es zu Verstopfungen des Vorkühlers kommt. Durch eine permanente Berieselung mit einer Teer-Wasser-Emulsion (ca. 30 % Teer und ca. 70 % Wasser) im oberen und mittleren Teil der Vorkühler sollen die Feststoff- und Naphthalinablagerungen auf den Kühlrohren abgelöst werden. Da diese Teer-Wasser-Emulsion bereits nahezu mit Naphthalin gesättigt ist und außerdem Feststoffe beinhaltet, führt diese permanente Vorkühlerberieselung zu keiner wesentlichen Verfiigbarkeitserhöhung bei der Koksofenrohgaskühlung. Aus diesem Grunde ist es üblich, dass die Vorkühler im ständigen Rhythmus, teilweise täglich, mittels Dampf gereinigt werden müssen. Da die Vorkühler während des Reinigungsvorganges nicht zur Rohgaskühlung zur Verfügung stehen, müssen zusätzliche Vorkühlerkapazitäten ständig betriebsbereit sein.

Um die geforderten Grenzwerte für den Schwefelwasserstoff- und den Ammoniakgehalt im gereinigten Koksofengas nach der Gaswäsche zu erreichen, ist die konstante Einhaltung von niedrigen Vorkühleraustrittstemperaturen erforderlich. Es muss eine zuverlässige Vorkühlung des Koksofenrohgases kontinuierlich gewährleistet sein.

Aus der EP 0 221 061 ist es bekannt, dass das Koksofenrohgas nach Kühlung in der Vorlage zunächst durch einen Elektrofilter und anschließend in die Vorkühler geführt wird. Durch das Elektrofilter werden zwar ein Großteil der Feststoffe in dem Koksofenrohgas abgeschieden, die Gefahr von Naphthalinablagerungen auf den Kühlrohren der Vorkühler wird jedoch nicht beseitigt. Auch bei dieser Verfahrensweise muss eine Berieselung mit einem Teer-Wasser-Gemisch zur Ablösung der Ablagerungen vorgenommen werden.

Der Erfindung liegt die Aufgabe zugrunde, eine Verstopfung der Vorkühler durch Feststoff- und Naphthalinablagerungen zu vermeiden und somit eine hohe Verfügbarkeit der Vorkühler zu gewährleisten.

Diese Aufgabe wird durch die Merkmale des Patentanspruchs 1 gelöst.

Weiterbildungen erfolgen gemäß den Merkmalen der Unteransprüche.

Bei dem erfindungsgemäßen Verfahren wird in dem Elektrofilter durch elektrostatische Abscheidung der aerosolförmig vorliegenden Bestandteile des Koksofenrohgases der Feststoffgehalt des Koksofenrohgases bei einer Temperatur von ca. 80°C um 99,9 % reduziert. Bei der Temperatur von ca. 80°C verbleibt das in dem Koksofenrohgas vorhandene Naphthalin in der Gasphase und passiert somit das Elektrofilter. Das bedeutet, dass die im Elektrofilter anfallende Flüssigphase aus einem besonders naphthalinarmen Teer besteht. Erfindungsgemäß wird diese naphthalinarme Flüssigphase zur Spülung der Kühlerrohre in den Vorkühlem verwendet. Die Flüssigphase enthält wenig Wasser, da das Elektrofilter isotherm betrieben wird.

Der Wasseranteil der Flüssigphase kann gemäß einer Weiterbildung der Erfindung in einem Teerscheider abgeschieden werden.

Die Flüssigphase enthält die in dem Elektrofilter abgeschiedenen Feststoffe. Da der Großteil der Feststoffe des Koksofenrohgases bei der direkten Rohgaskühlung in der Vorlage abgeschieden wird, ist die Flüssigphase trotz des Feststoffgehaltes für die Spülung in den Vorkühlern geeignet.

Gemäß einer Weiterbildung kann die Flüssigphase in einer Teerzentrifuge von den Feststoffen befreit werden. Bei dieser Verfahrensweise ist sichergestellt, dass keine Feststoffe durch die Flüssigphase in die Vorkühler gelangen.

Wie bereits dargestellt, sublimiert das Naphthalin des Koksofenrohgases bei der Abkühlung von ca. 80°C auf ca. 20°C und lagert sich auf den Kühlrohren der Vorkühler ab. Es gelingt nun, ein Verstopfen der Vorkühler dadurch zu verhindern, dass diese kontinuierlich mit dem zuvor aus dem Ablauf des Elektrofilters gewonnenen naphthalinarmen Teer gespült werden.

Damit das Koksofengas in dem Elektrofilter nicht abgekühlt wird und es somit zu unerwünschten Kondensationen kommt, wird gemäß einer Weiterbildung der Erfindung das Elektrofilter derart isoliert, dass das Filter isotherm arbeitet.

Das Spülen mit dem naphthalinarmen Teer kann grundsätzlich mit allen dafür geeigneten Düsen, vorzugsweise im oberen Bereich des Vorkühlers, durchgeführt werden. Da der Teer naphthalin- und feststoffarm ist, ist die Aufgabe des Teers in den Vorkühler an nur einer Stelle für den Spülerfolg ausreichend.

Gemäß einer weiteren Ausgestaltung der Erfindung sollte das Spülen in drei Ebenen, oben, in der Mitte und im unteren Drittel der Vorkühler erfolgen. Dadurch.ist auf jeden Fall sichergestellt, dass Ablagerungen an den Kühlerrohren nicht entstehen.

Bevorzugt ist das Spülen in den Vorkühlern mit einer an sich bekannten Prallringdüse (DE-PS 197 48 693). Die Prallringdüsen sorgen für eine optimale Verteilung des feststoff- und naphthalinfreien Teeres auf den Rohren der Vorkühler. Die am Fuß der Vorkühler ablaufenden teerigen und wässrigen Kondensate werden wie üblich wieder zur Rohgasvorlage gefördert, wo sie gemeinsam mit der bei der direkten Rohgaskühlung anfallenden flüssigen Phase verarbeitet werden.

Durch das erfindungsgemäße Verfahren kann ein kontinuierlicher Vorkühlerbetrieb aufrechterhalten werden, da Ablagerungen an den Kühlerrohren nicht entstehen und die Reinigungsvorgänge nicht mehr erforderlich sind. Es werden außerdem die bei den sonst erforderlichen Reinigungsprozessen (Reinigung mit Dampf) auftretenden Emissionen vermieden. Durch die Spülung mit dem naphthalinarmen Teer wird die Verfügbarkeit der Vorkühlung deutlich erhöht. Die Investitionskosten reduzieren sich, da weniger Vorkühler vorgesehen werden müssen. Da die Reinigungsvorgänge wegfallen können, reduzieren sich ebenfalls die Personalkosten.

Durch den kontinuierlichen Vorkühlerbetrieb ist die Einhaltung von konstanten niedrigen Koksofenrohgastemperaturen am Vorkühleraustritt gewährleistet. Es verbessert sich die Koksofengasqualität, da die Schwefelwasserstoff-, Ammoniak- und Benzolauswaschung bei konstant niedriger Temperatur effektiver vorgenommen werden kann. Bei der Benzolgewinnung treten keine Korrosionen durch die Vermeidung von Schwefelwasserstoff- und ammoniakhaltigen Kondensaten mehr auf. Die Rückführung der Teer-Wasser-Emulsion, die gemäß dem Stand der Technik zur Vorkühlerspülung verwendet wird, entfällt.

Die vorgenannten, sowie die beanspruchten und im Ausführungsbeispiel beschriebenen, erfindungsgemäß zu verwendenden Verfahrensschritte unterliegen hinsichtlich ihrer Verfahrensbedingungen keinen besonderen Ausnahmebedingungen, so dass die in dem jeweiligen Anwendungsgebiet bekannten Auswahlkriterien im Rahmen der Ansprüche uneingeschränkt Anwendung finden können.

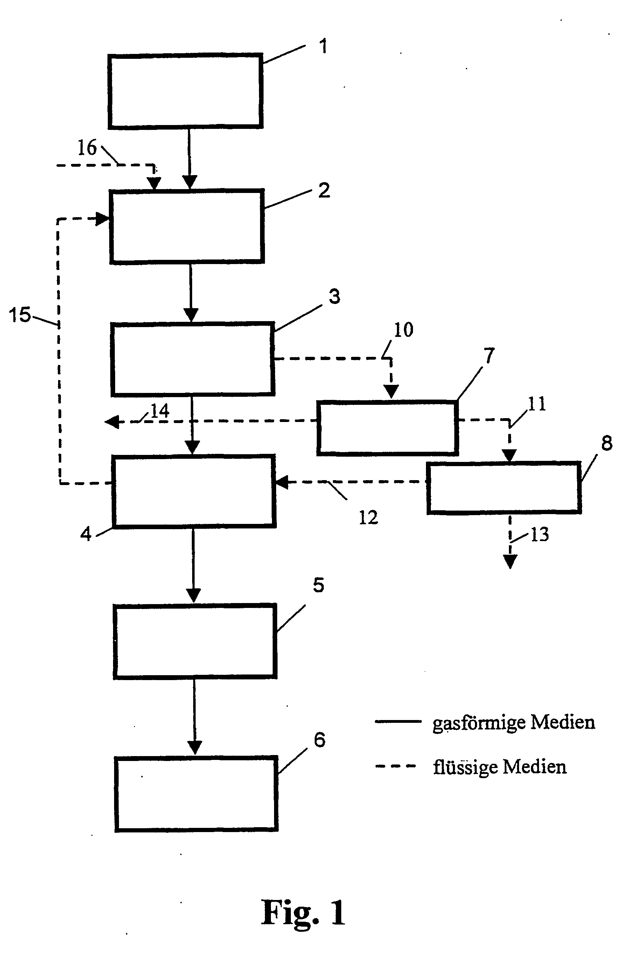

Weitere Einzelheiten, Merkmale und Vorteile des Gegenstandes der Erfindung ergeben sich aus der nachfolgenden Beschreibung der zugehörigen Zeichnung, in der beispielhaft eine bevorzugte Ausführungsform eines Verfahrens zur Kühlung von Koksofenrohgas dargestellt ist. In der Zeichnung zeigt
- Figur 1: ein Verfahrensschema des Verfahrens zur Spülung der Vorkühler mit dem naphthalinarmen Teer.

In der Figur 1 ist die Behandlung des Koksofenrohgases schematisch dargestellt. Das aus den Koksöfen 1 kommende Koksofenrohgas wird in einer Vorlage 2 mit Hilfe von Berieselungswasser 16 direkt auf ca. 80°C gekühlt und in einen Elektrofilter 3 geleitet. Von dem thermisch isolierten Elektrofilter 3 wird das Koksofenrohgas in Vorkühler 4 geführt. Von den Vorkühlem 4 wird das Koksofenrohgas in eine Koksofengasreinigung 5 gefördert, bevor es zu einem Verbraucher 6 gelangt.

Der Flüssigablauf des Elektrofilters 3 wird über eine Leitung 10 in einen Teerscheider 7 geführt. Das Kohlewasser wird über eine Leitung 14 einer nicht dargestellten Kohlewasserbehandlung zugeführt. Der in dem Teerscheider 7 entwässerte naphthalinarme Teer wird über eine Leitung 11 einer Teerzentrifuge 8 zugeführt. In der Teerzentrifuge 8 werden die Feststoffe abgeschieden. Die Feststoffe werden über eine Leitung 13 der Einsatzkohle zugegeben. Der naphthalinarme Teer wird aus der Teerzentrifuge 8 über eine Leitung 12 in den Vorkühler 4 geleitet. Dort wird der naphthalinarme Teer zur Spülung der Kühlrohre der Vorkühler 4 verwendet. Die in den Vorkühlem 4 anfallenden teerigen und wässrigen Kondensate werden wie üblich über eine Leitung 15 zu der Vorlage 2 gefördert.

### Bezugszeichenliste

- 1: Koksofen
- 2: Vorlage
- 3: Elektrofilter
- 4: Vorkühler
- 5: Koksofengasreinigung
- 6: Verbraucher
- 7: Teerscheider
- 8: Teerzentrifuge
- 10: Leitung
- 11: Leitung
- 12: Leitung
- 13: Leitung
- 14: Leitung
- 15: Leitung
- 16: Berieselungswasser

## Patentansprüche

1. Verfahren zur Behandlung von Koksofenrohgas, bei dem das Koksofenrohgas nach Kühlung in der Vorlage zunächst durch einen Elektrofilter und anschließend in die Vorkühler geführt wird, **dadurch gekennzeichnet, dass** der Ablauf des Elektrotiltcrs, der aus einer naphthalinarmen Flüssigphase besteht, zum Spülen in den Vorkühlern verwendet wird.

2. Verfahren nach Anspruch 1, **dadurch gekennzeichnet, dass** der Ablauf des Elektrofilters in einen Teerscheider geleitet und der in dem Teerscheider gewonnene naphthalinarme Teer zum Spülen in den Vorkühlern verwendet wird.

3. Verfahren nach Anspruch 1 und 2, **dadurch gekennzeichnet, dass** der in dem Teerscheider gewonnene naphthalinarme Teer zum Abscheiden der Feststoffe in eine Teerzentrifuge geleitet wird, bevor er zum Spülen in den Vorkühlern verwendet wird.

4. Verfahren nach Anspruch 1 bis 3, **dadurch gekennzeichnet, dass** das Elektrofilter isotherm betrieben wird.

5. Verfahren nach Anspruch 1 bis 4, **dadurch gekennzeichnet, dass** das Spülen in den Vorkühlem mittels Prallringdüsen erfolgt.

6. Verfahren nach Anspruch 5, **dadurch gekennzeichnet, dass** das Spülen in den Vorkühlem an einer einzigen Aufgabestelle erfolgt.

7. Verfahren nach Anspruch 1 bis 6, **dadurch gekennzeichnet, dass** das Spülen in den Vorkühlem oben, mittig und im unteren Drittel der Vorkühler vorgenommen wird.

## Claims

1. A method for handling coke oven crude gas according to which after cooling in the receiver tank the coke oven crude gas is first passed through an electrostatic filter and then into the pre-cooler,
**characterised in that**
the run-off from the electrostatic filter, which consists of a liquid phase with low naphthalene content, is used for scavenging in the pre-coolers.

2. The method according to claim 1,
**characterised in that**
the run-off from the electrostatic filter is fed into a tar extractor and the tar having a low naphthalene content that is recovered in the tar extractor is used for scavenging in the pre-coolers.

3. The method according to claims 1 and 2,
**characterised in that**
the tar having a low naphthalene content that is recovered in the tar extractor is fed into a tar centrifuge in order to extract the solids before it is used for scavenging in the pre-coolers.

4. The method according to claims 1 to 3,
**characterised in that**
the electrostatic filter is operated isothermally.

5. The method according to claims 1 to 4,
**characterised in that**
scavenging in the pre-coolers is carried out via thrust ring nozzles.

6. The method according to claim 5,
**characterised in that**
scavenging in the pre-coolers takes place at a single inlet point.

7. The method according to claims 1 to 6,
**characterised in that**
scavenging in the pre-coolers takes place at the top, in the middle and in the lower third of the pre-coolers.

## Revendications

1. Procédé de traitement de gaz brut de four à coke, dans lequel le gaz brut de four à coke, après refroidissement dans le collecteur, est d'abord guidé à travers un électro-filtre et ensuite vers les condenseurs primaires,
**caractérisé en ce que**
les rejets de l'électro-filtre, qui consistent en une phase liquide pauvre en naphtaline, sont utilisés pour le rinçage dans les condenseurs primaires.

2. Procédé selon la revendication 1,
**caractérisé en ce que**
les rejets de l'électro-filtre sont dirigés vers un dégoudronneur et que le goudron pauvre en naphtaline récupéré dans le dégoudronneur est utilisé pour le rinçage dans les condenseurs primaires.

3. Procédé selon les revendications 1 et 2,
**caractérisé en ce que**
les rejets pauvres en naphtaline récupérés dans le dégoudronneur sont dirigés vers une centrifugeuse à goudron pour en séparer les matières solides avant qu'on les utilise pour le rinçage dans les condenseurs primaires.

4. Procédé selon les revendications 1 à 3,
**caractérisé en ce que**
l'électro-filtre fonctionne de manière isotherme.

5. Procédé selon les revendications 1 à 4,
**caractérisé en ce que**
le rinçage dans les condenseurs primaires est réalisé à l'aide de tuyères de projection annulaires.

6. Procédé selon la revendication 5,
**caractérisé en ce que**
le rinçage dans les condenseurs primaires a lieu à un seul point de traitement.

7. Procédé selon les revendications 1 à 6,
**caractérisé en ce que**
le rinçage dans les condenseurs primaires est réalisé en haut, au centre et dans le tiers inférieur des condenseurs primaires.
